# EUROPÄISCHE PATENTSCHRIFT

(11) **EP 3 436 350 B1**
(45) Veröffentlichungstag und Bekanntmachung des Hinweises auf die Patenterteilung: **01.09.2021**
(21) Anmeldenummer: 17715104.0
(22) Anmeldetag: 31.03.2017
(51) Int. Cl.: B64D 11/00, B64D 11/06

(54) **TRENNWANDVORRICHTUNG UND VERFAHREN ZUR HERSTELLUNG EINER TRENNWANDVORRICHTUNG**
SEPARATING WALL DEVICE AND METHOD FOR PRODUCING A SEPARATING WALL DEVICE
SYSTÈME DE PAROI DE SÉPARATION ET PROCÉDÉ DE FABRICATION D'UN SYSTÈME DE PAROI DE SÉPARATION

(30) Priorität: 31.03.2016 DE 102016105893
(43) Veröffentlichungstag der Anmeldung: 06.02.2019
(73) Patentinhaber: E.I.S. Aircraft Products and Services GmbH, 53881 Euskirchen (DE)
(72) Erfinder: HUPPERICH, Gerold, Karl, 53949 Dahlem (DE); ACHILLES, Sven, 74545 Michelfeld (DE); STURM, Thomas, 56477 Zehnhausen (DE)
(74) Vertreter: Daub, Thomas
(86) Internationale Anmeldenummer: PCT/EP2017/057652
(87) Internationale Veröffentlichungsnummer: WO 2017/167946

(56) Entgegenhaltungen:
- EP-A1- 0 547 362
- EP-A1- 0 708 018
- WO-A1-2014/093545
- WO-A1-2016/168441
- DE-A1-102009 010 861

## Beschreibung

### Stand der Technik

Die Erfindung geht aus von einer Trennwandvorrichtung nach dem Oberbegriff des Anspruchs 1 und von einem Verfahren zur Herstellung einer Trennwandvorrichtung nach dem Oberbegriff des Anspruchs 12.

Aus der DE 10 2009 010 861 A1 ist eine Trennwandvorrichtung für ein Flugzeug bekannt, mit einer Rahmeneinheit zur Aufnahme einer Trenneinheit, wobei die Rahmeneinheit aus gleichförmigen Holmbauteilen aufgebaut ist. Aus der WO 2014 / 093545 A1 ist eine Trennwandvorrichtung für ein Flugzeug bekannt, mit einer Rahmeneinheit zur Aufnahme einer beleuchtbaren Trennscheibe, wobei die Rahmeneinheit ebenfalls aus mehreren in sich gleichförmigen Rahmenbauteilen besteht. Aus der EP 0 547 362 A1 ist eine Vorrichtung zur Unterteilung einer Flugzeugkabine bekannt, mit einer an einer Flugzeugsitzreihe befestigbaren Rahmeneinheit zur Aufnahme und Führung eines Vorhangs, wobei die Rahmeneinheit ebenfalls aus Rahmenbauteilen mit einem gleichbleibenden Querschnitt besteht.

Die Aufgabe der Erfindung besteht insbesondere darin, eine gattungsgemäße Trennwandvorrichtung mit verbesserten Eigenschaften hinsichtlich einer Flexibilität bereitzustellen. Die Aufgabe wird durch die kennzeichnenden Merkmale der Patentansprüche 1 und 12 gelöst, während vorteilhafte Ausgestaltungen und Weiterbildungen der Erfindung den Unteransprüchen entnommen werden können.

### Vorteile der Erfindung

Die Erfindung geht aus von einer Trennwandvorrichtung, insbesondere für ein Fahrzeug, mit zumindest einer Rahmeneinheit, welche zumindest in einem montierten Zustand zumindest einen Trenneinheitenaufnahmebereich, welcher insbesondere zur Aufnahme wenigstens einer Trenneinheit vorgesehen ist, definiert, und welche zumindest einen Rahmenabschnitt aufweist. Die Erfindung schlägt eine Luftfahrzeugtrennwandvorrichtung gemäß Anspruch 1 vor.

Es wird vorgeschlagen, dass der erfindungsgemäße Rahmenabschnitt entlang einer, insbesondere dauerhaft, in dem Rahmenabschnitt und entlang des Rahmenabschnitts verlaufenden Rahmenmittellinie betrachtet zumindest zwei, vorteilhaft zumindest drei, vorzugsweise zumindest vier und besonders bevorzugt zumindest fünf, insbesondere in Richtung der Rahmenmittelinie versetzte und insbesondere senkrecht zu der Rahmenmittellinie angeordnete, Rahmenquerschnitte aufweist, welche wesentlich verschieden voneinander sind. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Trennwandvorrichtung" soll in diesem Zusammenhang insbesondere zumindest ein Teil, insbesondere eine Unterbaugruppe, einer Trennwand verstanden werden. Insbesondere kann die Trennwandvorrichtung auch die gesamte Trennwand umfassen. Vorteilhaft ist die Trennwandvorrichtung dabei, insbesondere speziell, zu einem Einsatz in einem Fahrzeug, vorteilhaft einer Fahrzeugkabine des Fahrzeugs, vorgesehen. Insbesondere kann die Trennwand dabei auch als Teil einer Stauraumeinheit, insbesondere eines Schranks, einer Gepäckablage und/oder eines Küchensegments, ausgebildet sein. Das Fahrzeug ist erfindungsgemäß ein Luftfahrzeug, wie beispielsweise ein Personenflugzeug, Transportflugzeug, Gleitflugzeug, Hubschrauber und/oder Luftschiff.

Ferner soll unter einer "Rahmeneinheit" insbesondere eine Einheit verstanden werden, welche eine insbesondere zumindest teilweise tragende Struktur, insbesondere Rahmenstruktur, ausbildet und insbesondere zu einer Aufnahme, Halterung, Befestigung und/oder Führung zumindest eines Objekts, insbesondere wenigstens einer Trenneinheit, vorgesehen ist und dabei insbesondere das Objekt, insbesondere die Trenneinheit, zumindest teilweise, vorzugsweise zu wenigstens einem Großteil und besonders bevorzugt vollständig, umgibt und/oder umfasst. Dazu weist die Rahmeneinheit insbesondere zumindest ein, bevorzugt zumindest teilweise holmförmiges Rahmenelement, vorteilhaft Seitenrahmenelement und/oder Querrahmenelement, auf. Das Rahmenelement kann dabei als Hohlprofil und/oder als Vollprofil ausgebildet sein. Vorteilhaft ist die Rahmeneinheit von einer Tragestruktur des Fahrzeugs, wie beispielsweise einem Boden, einer Decke, einer Seitenwand, einer Gepäckablage und/oder einem beliebigen weiteren Strukturbauteil des Fahrzeugs, verschieden. Insbesondere kann die Rahmeneinheit auch modular aufgebaut sein und vorzugsweise eine Mehrzahl, insbesondere zusammensteckbarer, Rahmenelemente umfassen. Bevorzugt besteht die Rahmeneinheit zumindest teilweise, vorzugsweise zu wenigstens einem Großteil und besonders bevorzugt vollständig, aus einem Kunststoff, aus einem Metall, insbesondere Stahl, Titan und/oder Aluminium, und/oder aus einem Verbundwerkstoff, vorteilhaft einem Faserverbundwerkstoff und besonders bevorzugt einem Faserverbundkunststoff, wie beispielsweise einem kohlenstofffaserverstärkten, einem mineralfaserverstärkten, einem aramidfaserverstärkten, einem keramikfaserverstärkten und/oder vorteilhaft einem glasfaserverstärkten Kunststoff, vorteilhaft einem Thermoplast. Insbesondere kann die Rahmeneinheit auch zumindest teilweise, vorzugsweise zu wenigstens einem Großteil und besonders bevorzugt vollständig, aus einem austenitischen, nichtrostenden Fliegwerkstoff bestehen. Unter dem Ausdruck "zu wenigstens einem Großteil" sollen dabei insbesondere zumindest 55 %, vorteilhaft zumindest 65 %, vorzugsweise zumindest 75 %, besonders bevorzugt zumindest 85 % und besonders vorteilhaft zumindest 95 % verstanden werden. Zudem soll unter einem "Rahmenabschnitt" insbesondere zumindest ein Teil der Rahmeneinheit verstanden werden. Erfindungsgemäß ist der Rahmenabschnitt dabei in einem von einem Eckbereich der Rahmeneinheit verschiedenen Bereich angeordnet. Insbesondere kann der Rahmenabschnitt auch der gesamten Rahmeneinheit entsprechen. Ferner soll unter einer "Rahmenmittellinie" insbesondere eine, insbesondere hypothetische, Linie verstanden werden, welche einen Verlauf des Rahmenabschnitts abbildet und/oder nachbildet und sich insbesondere zentral durch den Rahmenabschnitt erstreckt. Insbesondere schneidet die Rahmenmittellinie dabei zumindest einen Mittelpunkt, insbesondere geometrischen Mittelpunkt, eines beliebigen, insbesondere zu der Rahmenmittellinie senkrecht angeordneten, Rahmenquerschnitts der Rahmeneinheit. Vorteilhaft schneidet die Rahmenmittelinie jeden Mittelpunkt, insbesondere geometrischen Mittelpunkt, jedes, insbesondere zu der Rahmenmittellinie senkrecht angeordneten, Rahmenquerschnitts der Rahmeneinheit. Vorteilhaft ist die Rahmenmittelinie dabei derart angeordnet, dass ein senkrechter Abstand der Rahmenmittellinie zu gegenüberliegenden Begrenzungswänden, insbesondere äußeren und/oder inneren Begrenzungswänden, der Rahmeneinheit, insbesondere an jedem Punkt, gleich ist. Ferner kann ein, insbesondere zu der Rahmenmittellinie senkrecht angeordneter, Rahmenquerschnitt der Rahmeneinheit eine beliebige Form und/oder Kontur aufweisen, wie beispielsweise oval, ellipsenförmig, kreisförmig, dreieckig, viereckig, sechseckig, achteckig, sternförmig und/oder kreuzförmig. Unter der Wendung, dass zwei Objekte "wesentlich verschieden" voneinander sind, soll erfindungsgemäß verstanden werden, dass sich eine Kontur, eine Form, eine relative Orientierung und/oder wenigstens eine Erstreckungslänge der Objekte, bei einer Betrachtung in zumindest einer Richtung, in Richtung der Rahmenmittellinie, um zumindest 5 %, vorteilhaft um zumindest 10 %, vorzugsweise um zumindest 15 %, besonders vorteilhaft um zumindest 20 % und besonders bevorzugt um zumindest 25 % voneinander unterscheiden, insbesondere durch einen Flächenanteil, einen Längenanteil und/oder eine relative Orientierung. Durch diese Ausgestaltung kann eine Trennwandvorrichtung mit verbesserten Eigenschaften hinsichtlich einer Flexibilität, insbesondere einer Designflexibilität, bereitgestellt werden. Zudem kann vorteilhaft eine Stabilität erhöht und/oder ein Gewicht der Trennwandvorrichtung verringert werden. Darüber hinaus kann vorteilhaft eine Effizienz, insbesondere eine Bauteileeffizienz, eine Bauraumeffizienz, eine Montageeffizienz und/oder eine Kosteneffizienz, verbessert werden.

Vorzugsweise weisen die Rahmenquerschnitte wesentlich verschiedene Außendurchmesser auf. In diesem Zusammenhang soll unter einem "Außendurchmesser" eines Rahmenquerschnitts, insbesondere ein Durchmesser eines kleinsten, insbesondere gedachten, Kreises verstanden werden, welcher den Rahmenquerschnitt gerade komplett umschließt und insbesondere eine äußere Begrenzungswand der Rahmeneinheit gerade berührt. Vorteilhaft weisen die, insbesondere wesentlich verschiedenen, Rahmenabschnitte dabei eine selbe Außenform und/oder Außenkontur auf und unterscheiden sich vorteilhaft lediglich durch eine, insbesondere äußere, Erstreckungslänge. Hierdurch kann die Rahmeneinheit und/oder der Rahmenabschnitt vorteilhaft einfach und/oder kostengünstig an unterschiedliche Anforderungen angepasst werden.

Darüber hinaus wird vorgeschlagen, dass die Rahmenquerschnitte wesentlich verschiedene Innendurchmesser aufweisen. Unter einem "Innendurchmesser" eines Rahmenquerschnitts soll dabei insbesondere ein Durchmesser eines größten, insbesondere gedachten, Kreises verstanden werden, welcher in einem Zentrum des Rahmenquerschnitts angeordnet werden kann und den Rahmenquerschnitt, insbesondere eine innere Begrenzungswand der Rahmeneinheit, gerade berührt. Insbesondere ist der Rahmenabschnitt in diesem Fall zumindest teilweise als Hohlprofil ausgebildet und weist eine zentral angeordnete Ausnehmung auf. Vorteilhaft weisen die, insbesondere wesentlich verschiedenen, Rahmenabschnitte eine selbe Innenform und/oder Innenkontur auf und unterscheiden sich vorteilhaft lediglich durch eine, insbesondere innere, Erstreckungslänge. Hierdurch kann insbesondere besonders vorteilhaft eine Stabilität erhöht werden, insbesondere ohne äußere Bemaßungen der Rahmeneinheit zu verändern. Zudem kann vorteilhaft eine Bauraumeffizienz und/oder ein Gewicht der Rahmeneinheit optimiert werden.

Ferner wird vorgeschlagen, dass die Rahmenquerschnitte wesentlich verschiedene maximale und/oder minimale Wanddicken und/oder Wandstärken aufweisen, wodurch insbesondere eine vorteilhafte Anpassung der Rahmeneinheit erreicht werden kann.

Gemäß eines weiteren Aspekts der Erfindung, welcher insbesondere für sich allein oder vorteilhaft zusätzlich zu den genannten Aspekten der Erfindung realisiert werden kann, und bevorzugt mit zumindest einigen, vorteilhaft wenigstens einem Großteil und bevorzugt sämtlichen der genannten Aspekte kombiniert werden kann, wird eine Trennwandvorrichtung, insbesondere für ein Fahrzeug, vorgeschlagen, mit zumindest einer Rahmeneinheit, welche zumindest in einem montierten Zustand zumindest einen Trenneinheitenaufnahmebereich, welcher insbesondere zur Aufnahme wenigstens einer Trenneinheit vorgesehen ist, definiert, und zumindest einen Rahmenabschnitt aufweist, wobei der Rahmenabschnitt zumindest in einer Richtung parallel zu einer Haupterstreckungsebene des Trenneinheitenaufnahmebereichs betrachtet und vorteilhaft parallel zu einem Untergrund und/oder Boden, insbesondere des Fahrzeugs, betrachtet einen von einem geraden Verlauf abweichenden Verlauf, insbesondere einen gekrümmten und/oder gebogenen Verlauf, aufweist. Hierdurch können insbesondere die bereits zuvor genannten Vorteile erreicht werden. Insbesondere kann durch eine entsprechende Ausgestaltung eine Trennwandvorrichtung mit verbesserten Eigenschaften hinsichtlich einer Flexibilität, insbesondere einer Designflexibilität, bereitgestellt werden. Zudem kann vorteilhaft eine Stabilität erhöht und/oder ein Gewicht der Trennwandvorrichtung verringert werden. Darüber hinaus kann vorteilhaft eine Effizienz, insbesondere eine Bauteileeffizienz, eine Bauraumeffizienz, eine Montageeffizienz und/oder eine Kosteneffizienz, verbessert werden. Unter einer "Haupterstreckungsebene" eines Objekts soll dabei insbesondere eine Ebene verstanden werden, welche parallel zu einer größten Seitenfläche eines kleinsten, insbesondere gedachten, Quaders ist, welcher das Objekt gerade noch vollständig umschließt, und insbesondere durch einen Mittelpunkt, insbesondere einen geometrischen Mittelpunkt, des Quaders verläuft.

Eine besonders hohe Stabilität kann dann erreicht werden, wenn der erfindungsgemäße Rahmenabschnitt einstückig ausgebildet ist. Unter "einstückig" soll in diesem Zusammenhang insbesondere zumindest stoffschlüssig verbunden und/oder miteinander ausgebildet verstanden werden. Der Stoffschluss kann beispielsweise durch einen Klebeprozess, einen Anspritzprozess, einen Schweißprozess, einen Lötprozess und/oder einen anderen Prozess hergestellt werden. Vorteilhaft soll unter einstückig aus einem Stück und/oder in einem Stück geformt verstanden werden. Vorzugsweise wird dieses eine Stück aus einem einzelnen Rohling, einer Masse und/oder einem Guss, wie beispielsweise in einem Extrusionsverfahren, insbesondere einem Ein- und/oder Mehrkomponenten-Extrusionsverfahren, und/oder einem Spritzgussverfahren, insbesondere einem Ein- und/oder Mehrkomponenten-Spritzgussverfahren, hergestellt. Des Weiteren weist die erfindungsgemäße Rahmeneinheit zumindest ein im montierten Zustand zumindest im Wesentlichen vertikal angeordnetes Seitenrahmenelement und zumindest ein zumindest im Wesentlichen senkrecht zu dem Seitenrahmenelement angeordnetes Querrahmenelement auf, wobei der Rahmenabschnitt, vollständig, in dem Seitenrahmenelement angeordnet ist. In diesem Zusammenhang soll unter einem "zumindest im Wesentlichen vertikal angeordneten Seitenrahmenelement" insbesondere ein Seitenrahmenelement verstanden werden, welches zumindest abschnittsweise zumindest im Wesentlichen vertikal angeordnet ist. Dabei soll unter dem Ausdruck "zumindest im Wesentlichen vertikal" insbesondere eine Richtung verstanden werden, welche mit einer, insbesondere in einer selben Ebene angeordneten, Vertikalrichtung und/oder vertikalen Bezugsrichtung einen Winkel von höchstens 8°, vorzugsweise von höchstens 5° und besonders bevorzugt von höchstens 2° einschließt. Ferner soll unter einem "vertikal angeordneten Seitenrahmenelement" insbesondere ein Seitenrahmenelement verstanden werden, welches sich in einem montierten Zustand in eine Vertikalrichtung erstreckt. Dabei soll unter einer "Vertikalrichtung" insbesondere eine Höhenrichtung verstanden werden und/oder eine Richtung, welche im montierten Zustand senkrecht zu einem Untergrund und/oder Boden, insbesondere des Fahrzeugs, angeordnet ist. Ferner soll der Ausdruck "zumindest im Wesentlichen senkrecht" insbesondere eine Ausrichtung einer Richtung relativ zu einer Bezugsrichtung definieren, wobei die Richtung und die Bezugsrichtung, insbesondere in einer Ebene betrachtet, einen Winkel insbesondere zwischen 82° und 98°, vorteilhaft zwischen 85° und 95° und besonders bevorzugt zwischen 88° und 92° einschließen. Bevorzugt weist die Rahmeneinheit dabei zumindest zwei, insbesondere sich gegenüberliegende, Seitenrahmenelemente und/oder zumindest zwei, insbesondere sich gegenüberliegende, Querrahmenelemente auf. Darüber hinaus weist die Rahmeneinheit vorteilhaft zumindest ein als Fußstütze ausgebildetes Rahmenelement, insbesondere Querrahmenelement, auf. Alternativ oder zusätzlich ist jedoch im Rahmen der Erfindung auch denkbar, dass der Rahmenabschnitt, vollständig, in einem Querrahmenelement angeordnet ist. Hierdurch kann insbesondere eine Stabilität und/oder eine Raumnutzung optimiert werden.

Ferner wird vorgeschlagen, dass die Rahmeneinheit zumindest abschnittsweise, insbesondere zumindest der Rahmenabschnitt, einen mehrschichtigen Aufbau mit zumindest zwei und vorteilhaft zumindest drei Schichten aufweist, welche vorteilhaft zu wenigstens einem Großteil aus unterschiedlichen Materialien bestehen. Hierdurch kann insbesondere eine vorteilhafte Flexibilität und/oder Stabilität erreicht werden. Zudem kann vorteilhaft eine Designvielfalt erhöht werden.

In einer bevorzugten Ausgestaltung der Erfindung wird vorgeschlagen, dass der Rahmenabschnitt in einem montierten Zustand in einem bodennahen Bereich der Rahmeneinheit angeordnet ist. Unter einem "bodennahen Bereich" soll in diesem Zusammenhang insbesondere ein Nahbereich eines Bodens, insbesondere des Fahrzeugs, verstanden werden. Unter einem "Nahbereich" soll insbesondere ein räumlicher Bereich verstanden werden, welcher aus Punkten gebildet ist, die weniger als 50 %, vorteilhaft weniger als 40 % und besonders bevorzugt weniger als 30 % einer Haupterstreckungslänge und vorteilhaft einer Vertikalerstreckungslänge der Rahmeneinheit von einem Referenzpunkt und/oder einem Referenzbauteil, insbesondere dem Boden, entfernt sind und/oder die jeweils einen Abstand von höchstens 120 cm, vorteilhaft von höchstens 100 cm, vorzugsweise von höchstens 80 cm und besonders bevorzugt von höchstens 60 cm von einem Referenzpunkt und/oder einem Referenzbauteil, insbesondere dem Boden, aufweisen. Unter einer "Vertikalerstreckungslänge" eines Objekts soll in diesem Zusammenhang insbesondere eine Erstreckungslänge des Objekts in Vertikalrichtung und vorteilhaft eine Höhe des Objekts verstanden werden. Hierdurch kann insbesondere eine Raumnutzung optimiert und/oder eine vorteilhafte Beinfreiheit erreicht werden.

Ferner wird vorgeschlagen, dass die Trennwandvorrichtung zumindest eine in dem Trenneinheitenaufnahmebereich angeordnete, vorteilhaft flexibel anpassbare und/oder modular aufgebaute, Trenneinheit aufweist, wobei die Rahmeneinheit dazu vorgesehen ist, zumindest einen Großteil einer Gewichtskraft der Trenneinheit und/oder dynamischer Kräfte der Trenneinheit, wie beispielsweise Beschleunigungskräfte, insbesondere bei einem Betrieb des Fahrzeugs, und/oder von außen wirkende Kräfte, wie beispielsweise Stoßkräfte, aufzunehmen und insbesondere in einem montierten Zustand in wenigstens eine Tragestruktur des Fahrzeugs, wie beispielsweise einen Boden, eine Decke, eine Seitenwand, eine Gepäckablage und/oder ein beliebiges weiteres Strukturbauteil des Fahrzeugs, einzuleiten. Unter einer "Trenneinheit" soll dabei insbesondere eine Einheit, vorteilhaft eine, bevorzugt großflächige, Deckflächeneinheit, verstanden werden, welche insbesondere dazu vorgesehen ist, zumindest zwei Bereiche zumindest teilweise voneinander zu trennen und/oder abzutrennen. Insbesondere ist die Trenneinheit dabei zumindest zu einer Raumtrennung und vorteilhaft zu einer Sichttrennung vorgesehen. Bevorzugt umfasst die Trenneinheit zumindest einen Funktionseinheitenaufnahmebereich für zumindest eine, vorteilhaft wechselbare und/oder austauschbare, Funktionseinheit. Der zumindest eine Funktionseinheitenaufnahmebereich und/oder die zumindest eine Funktionseinheit kann dabei beispielsweise als Zeitschriftenhalterung, als Elektronikhalterung, als Halterung eines Kinderkörbchens ("Baby Bassinet"), als Abstelleinheit, als Anzeigeeinheit, als Unterhaltungseinheit, als Sollbruchstruktur und/oder als Beleuchtungseinheit oder dergleichen ausgebildet sein. Insbesondere kann die Trenneinheit auch die zumindest eine Funktionseinheit umfassen. Besonders vorteilhaft umfasst die Trenneinheit eine Vielzahl von Funktionseinheitenaufnahmebereichen für eine Vielzahl von, insbesondere verschiedenen, Funktionseinheiten und/oder eine Vielzahl von verschiedenen Funktionseinheiten. Hierdurch kann insbesondere eine vorteilhafte Raumtrennung erreicht werden. Zudem kann vorteilhaft eine Bauraumeffizienz verbessert und/oder eine Benutzerfreundlichkeit erhöht werden.

Weist die Rahmeneinheit auf einer der Trenneinheit zugewandten Seite zumindest eine Befestigungseinheit auf, welche zumindest zu einer formschlüssigen Befestigung der Trenneinheit vorgesehen ist, kann insbesondere eine vorteilhaft stabile Verbindung zwischen der Rahmeneinheit und der Trenneinheit erreicht werden. Zudem kann ein vorteilhaft einfacher und/oder schneller Aufbau der Trennwandvorrichtung erreicht werden.

In einer besonders bevorzugten Ausgestaltung der Erfindung wird vorgeschlagen, dass eine Vertikalerstreckungslänge der Trenneinheit im montierten Zustand zumindest 30 %, vorteilhaft zumindest 40 %, vorzugsweise zumindest 50 % und besonders bevorzugt zumindest 60 % und/oder höchstens 95 %, vorzugsweise höchstens 90 % und besonders bevorzugt höchstens 85 % einer Vertikalerstreckungslänge der Rahmeneinheit entspricht. Besonders vorteilhaft ist dabei zumindest ein bodennaher Bereich frei von der Trenneinheit. Hierdurch kann insbesondere eine Raumnutzung weiter optimiert werden, wobei insbesondere ein vorteilhafter Stauraum geschaffen werden kann.

Darüber hinaus wird vorgeschlagen, dass die Trenneinheit zumindest im Wesentlichen formstabil ausgebildet ist, wodurch insbesondere Funktionsaufnahmebereiche der Trenneinheit auch für schwerere Objekte verwendet werden können.

Weiterhin wird vorgeschlagen, dass die Trenneinheit zumindest eine Fenstereinheit aufweist, welche eine Sichtscheibe umfasst, welche sich über zumindest 30 %, vorteilhaft über zumindest 45 %, vorzugsweise über zumindest 60 % und besonders bevorzugt über zumindest 75 %, einer Deckfläche, insbesondere Haupterstreckungsfläche, der Trenneinheit erstreckt, wodurch insbesondere ein vorteilhaft großflächiger Sichtbereich bereitgestellt werden kann und insbesondere Sicherheitsbestimmungen, insbesondere in einem als Luftfahrzeug ausgebildeten Fahrzeug eingehalten werden können. Vorteilhaft erstreckt sich die Sichtscheibe dabei in einem montierten Zustand über zumindest 60 %, vorteilhaft über zumindest 70 %, vorzugsweise über zumindest 80 % und besonders bevorzugt über zumindest 90 % einer Quererstreckungslänge der Trenneinheit.

Zudem geht die Erfindung aus von einem Verfahren zur Herstellung einer Trennwandvorrichtung, insbesondere für ein Fahrzeug, wobei die Trennwandvorrichtung zumindest eine Rahmeneinheit aufweist, welche zumindest in einem montierten Zustand zumindest einen Trenneinheitenaufnahmebereich, welcher insbesondere zur Aufnahme wenigstens einer Trenneinheit vorgesehen ist, definiert, und welche zumindest einen Rahmenabschnitt aufweist. Die Erfindung schlägt ein Verfahren zur Herstellung einer Luftfahrzeugtrennwandvorrichtung gemäß Anspruch 12 vor.

Der erfindungsgemäße Rahmenabschnitt weist entlang einer in dem Rahmenabschnitt und entlang des Rahmenabschnitts verlaufenden Rahmenmittellinie betrachtet zumindest zwei Rahmenquerschnitte auf, welche wesentlich verschieden voneinander ausgebildet werden. Hierdurch kann insbesondere eine Flexibilität, insbesondere eine Designflexibilität, verbessert werden. Zudem kann vorteilhaft eine Stabilität erhöht und/oder ein Gewicht der Trennwandvorrichtung verringert werden. Darüber hinaus kann vorteilhaft eine Effizienz, insbesondere eine Bauteileeffizienz, eine Bauraumeffizienz, eine Montageeffizienz und/oder eine Kosteneffizienz, verbessert werden.

Darüber hinaus wird erfindungsgemäß zumindest ein Teil eines Vorprodukts der Rahmeneinheit, insbesondere bei einer Herstellung der Rahmeneinheit, zur Formgebung der Rahmeneinheit in einem Behälter, insbesondere einem Druckbehälter, vorzugsweise einem Autoklav, mit einem Überdruck, insbesondere von zumindest 1 bar, vorteilhaft von zumindest 2 bar und besonders bevorzugt von zumindest 4,5 bar und/oder von höchstens 10 bar, vorteilhaft von höchstens 7,5 bar und besonders bevorzugt von höchstens 5,5 bar, beaufschlagt und erwärmt, insbesondere bei einer Temperatur von zumindest 100°C, vorteilhaft von zumindest 115°C und besonders vorteilhaft von zumindest 140°C und/oder von höchstens 170°C, vorteilhaft von höchstens 160°C und besonders vorteilhaft von höchstens 150°C. Hierdurch kann insbesondere eine vorteilhaft stabile, flexible und/oder kosteneffiziente Rahmeneinheit bereitgestellt werden.

Die Luftfahrzeugtrennwandvorrichtung und das Verfahren zur Herstellung der Luftfahrzeugtrennwandvorrichtung sollen hierbei nicht auf die oben beschriebene Anwendung und Ausführungsform beschränkt sein. Insbesondere kann die Luftfahrzeugtrennwandvorrichtung und das Verfahren zur Herstellung der Luftfahrzeugtrennwandvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen und die Beschreibung enthalten zahlreiche Merkmale in Kombination. Der Fachmann wird die Merkmale zweckmäßigerweise auch einzeln betrachten und zu sinnvollen weiteren Kombinationen, im Rahmen der Ansprüche, zusammenfassen.

Es zeigen:
- Fig. 1: ein als Luftfahrzeug ausgebildetes Fahrzeug mit einer nicht-sichtbaren, innerhalb des Fahrzeugs angeordneten, Trennwandvorrichtung in einer schematischen Darstellung,
- Fig. 2: die Trennwandvorrichtung mit einer Rahmeneinheit und einer Trenneinheit in einer perspektivischen Darstellung,
- Fig. 3: eine Befestigungseinheit der Rahmeneinheit in einer perspektivischen Schnittansicht,
- Fig. 4: die Rahmeneinheit in einer schematischen, seitlichen Schnittansicht,
- Fig. 5: ein erster Rahmenquerschnitt der Rahmeneinheit in einer Schnittansicht gemäß der Linie V-V in Figur 2 und Figur 4,
- Fig. 6: ein zweiter Rahmenquerschnitt der Rahmeneinheit in einer Schnittansicht gemäß der Linie VI-VI in Figur 2 und Figur 4,
- Fig. 7: ein Teil eines Vorprodukts zur Herstellung der Rahmeneinheit,
- Fig. 8: ein Behälter und Formwerkzeuge zur Herstellung der Rahmeneinheit,
- Fig. 9: eine weitere Trennwandvorrichtung mit einer Rahmeneinheit und einer Trenneinheit in einer perspektivischen Teildarstellung,
- Fig. 10: ein erster Rahmenquerschnitt der Rahmeneinheit aus Figur 9 in einer Schnittansicht gemäß der Linie X-X in Figur 9,
- Fig. 11: ein zweiter Rahmenquerschnitt der Rahmeneinheit aus Figur 9 in einer Schnittansicht gemäß der Linie XI-XI in Figur 9,
- Fig. 12: eine weitere Trennwandvorrichtung mit einer Rahmeneinheit und einer Trenneinheit in einer perspektivischen Teildarstellung,
- Fig. 13: die Rahmeneinheit aus Figur 12 in einer schematischen, seitlichen Schnittansicht,
- Fig. 14: ein erster Rahmenquerschnitt der Rahmeneinheit aus Figur 12 in einer Schnittansicht gemäß der Linie XIV-XIV in Figur 13,
- Fig. 15: ein zweiter Rahmenquerschnitt der Rahmeneinheit aus Figur 12 in einer Schnittansicht gemäß der Linie XV-XV in Figur 13,
- Fig. 16: eine weitere Trennwandvorrichtung mit einer modular aufgebauten Rahmeneinheit in einer perspektivischen Darstellung,
- Fig. 17: die weitere Trennwandvorrichtung aus Figur 16 mit einer Trenneinheit,
- Fig. 18: ein weiteres Ausführungsbeispiel einer Stauraumeinheit mit wenigstens einer Trennwandvorrichtung und
- Fig. 19: ein weiteres Ausführungsbeispiel einer Stauraumeinheit mit wenigstens einer Trennwandvorrichtung.

### Beschreibung der Ausführungsbeispiele

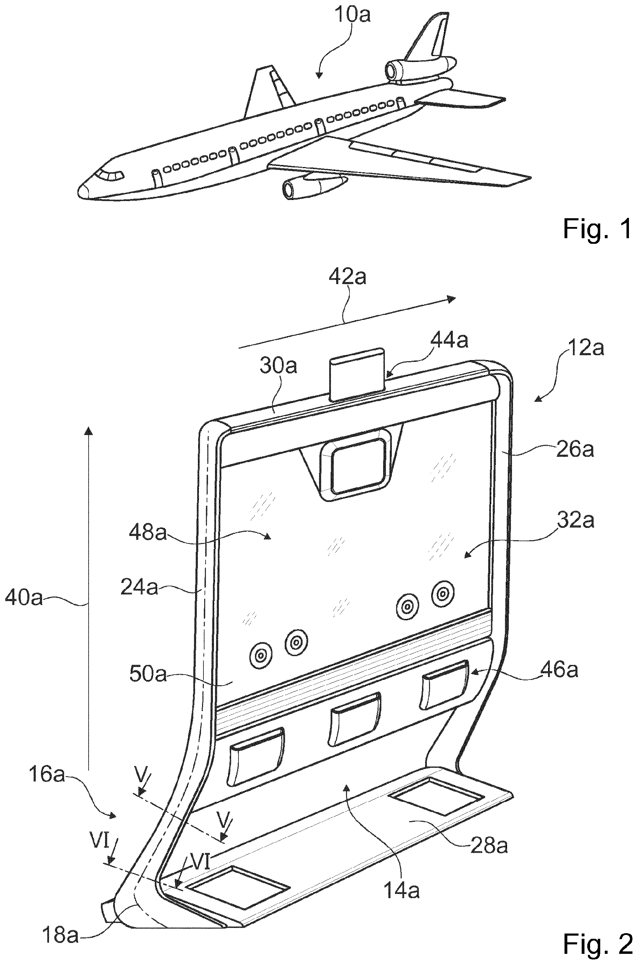

Figur 1 zeigt ein beispielhaft als Luftfahrzeug ausgebildetes Fahrzeug 10a in einer schematischen Ansicht. Das Fahrzeug 10a ist im vorliegenden Fall als Personenflugzeug ausgebildet. Alternativ ist jedoch auch denkbar, ein Fahrzeug als Transportflugzeug, Gleitflugzeug, Hubschrauber und/oder Luftschiff auszubilden.

Das Fahrzeug 10a umfasst zumindest eine Trennwandvorrichtung (vgl. Figur 2). Die Trennwandvorrichtung ist dabei als Luftfahrzeugtrennwandvorrichtung ausgebildet. Die Trennwandvorrichtung ist als Ständerwerk ausgebildet. Die Trennwandvorrichtung ist zu einem Aufstellen, innerhalb einer Fahrzeugkabine des Fahrzeugs 10a, insbesondere auf einem Boden der Fahrzeugkabine des Fahrzeugs 10a, vorgesehen. Alternativ ist jedoch auch denkbar, eine Trennwandvorrichtung innerhalb einer Fahrzeugkabine eines Fahrzeugs aufzuhängen und beispielsweise an einer Decke einer Seitenwand und/oder einer Gepäckablage anzuordnen und/oder zu befestigen. Zusätzlich könnte eine Trennwandvorrichtung zudem, insbesondere zu einer Erhöhung einer Stabilität, an einer Decke des Fahrzeugs befestigt sein.

Die Trennwandvorrichtung umfasst eine Rahmeneinheit 12a. Die Rahmeneinheit 12a besteht zu wenigstens einem Großteil aus Kunststoff. Die Rahmeneinheit 12a bildet eine tragende Struktur. Die Rahmeneinheit 12a ist zu einer Befestigung an einer Tragestruktur des Fahrzeugs 10a vorgesehen. Die Rahmeneinheit 12a ist von einer Tragestruktur des Fahrzeugs 10a verschieden.

Die Rahmeneinheit 12a definiert eine Haupterstreckungsebene. Die Rahmeneinheit 12a weist bei einer senkrechten Betrachtung der Haupterstreckungsebene eine zumindest im Wesentlichen rechteckige Form und/oder Kontur auf. Dabei umfasst die Rahmeneinheit 12a im vorliegenden Fall zwei, insbesondere sich gegenüberliegende und zueinander beanstandete, Seitenrahmenelemente 24a, 26a und zwei, insbesondere sich gegenüberliegende und zueinander beanstandete, Querrahmenelemente 28a, 30a.

Die Seitenrahmenelemente 24a, 26a sind im vorliegenden Fall zumindest im Wesentlichen identisch zueinander. Alternativ könnten Seitenrahmenelemente jedoch auch verschieden ausgebildet sein, wobei zumindest eines der Seitenrahmenelemente vorteilhaft an eine Kontur einer Fahrzeugkabine angepasst sein könnte und/oder eine Kontur der Fahrzeugkabine nachbilden könnte. Die Seitenrahmenelemente 24a, 26a sind jeweils einstückig ausgebildet. Die Seitenrahmenelemente 24a, 26a sind als Hohlprofil ausgebildet. Die Seitenrahmenelemente 24a, 26a sind in einem montierten Zustand zumindest im Wesentlichen vertikal, insbesondere bezüglich eines Bodens des Fahrzeugs 10a, angeordnet. Eine Haupterstreckungsrichtung der Seitenrahmenelemente 24a, 26a definiert dabei eine Vertikalrichtung 40a.

Die Querrahmenelemente 28a, 30a sind im vorliegenden Fall wesentlich verschieden voneinander. Die Querrahmenelemente 28a, 30a sind jeweils einstückig ausgebildet. Die Querrahmenelemente 28a, 30a sind in einem montierten Zustand zumindest im Wesentlichen senkrecht zu den Seitenrahmenelementen 24a, 26a angeordnet. Die Querrahmenelemente 28a, 30a sind in einem montierten Zustand zumindest im Wesentlichen horizontal, insbesondere bezüglich eines Bodens des Fahrzeugs 10a, angeordnet. Eine Haupterstreckungsrichtung der Querrahmenelemente 28a, 30a definiert dabei eine Querrichtung 42a. Ein erstes Querrahmenelement 28a der Querrahmenelemente 28a, 30a ist als Fußstütze ausgebildet. Das erste Querrahmenelement 28a ist in einem montierten Zustand in einem bodennahen Bereich angeordnet. Das erste Querrahmenelement 28a ist als, insbesondere geschlossenes, Hohlprofil ausgebildet. Das erste Querrahmenelement 28a ist im vorliegenden Fall einstückig mit den Seitenrahmenelementen 24a, 26a verbunden. Ein zweites Querrahmenelement 30a der Querrahmenelemente 28a, 30a ist als Abschlusselement ausgebildet. Das zweite Querrahmenelement 30a ist in einem montierten Zustand in einem deckennahen Bereich, insbesondere in einem Nahbereich einer Decke des Fahrzeugs 10a, angeordnet. Das zweite Querrahmenelement 30a ist als Hohlprofil ausgebildet. Das zweite Querrahmenelement 30a ist im vorliegenden Fall einstückig mit den Seitenrahmenelementen 24a, 26a verbunden. Alternativ könnte eine Rahmeneinheit jedoch auch als umlaufender Rahmen ausgebildet sein. In diesem Fall könnte eine Fußstütze separat von der Rahmeneinheit ausgebildet und zu einer Verbindung mit der Rahmeneinheit vorgesehen sein.

Die Rahmeneinheit 12a, insbesondere die Seitenrahmenelemente 24a, 26a, weist in einem montierten Zustand eine Vertikalerstreckungslänge, insbesondere eine Erstreckung in die Vertikalrichtung 40a, zwischen 100 cm und 200 cm und vorteilhaft zwischen 140 cm und 180 cm auf. Im vorliegenden Fall weist die Rahmeneinheit 12a eine Vertikalerstreckungslänge, insbesondere eine Erstreckung in die Vertikalrichtung 40a, von etwa 170 cm auf. Ferner weist die Rahmeneinheit 12a, insbesondere die Querrahmenelemente 28a, 30a, in einem montierten Zustand eine Quererstreckungslänge, insbesondere eine Erstreckung in die, insbesondere zu der Vertikalrichtung 40a senkrecht angeordnete, Querrichtung 42a, zwischen 60 cm und 250 cm und vorteilhaft zwischen 100 cm und 230 cm auf. Im vorliegenden Fall weist die Rahmeneinheit 12a eine Quererstreckungslänge, insbesondere eine Erstreckung in die Querrichtung 42a, von etwa 180 cm auf.

Die Rahmeneinheit 12a definiert in einem montierten Zustand einen Trenneinheitenaufnahmebereich 14a. Alternativ könnte eine Rahmeneinheit auch zumindest teilweise aus einem Metall, wie beispielsweise Stahl, Titan und/oder Aluminium, und/oder einem Verbundwerkstoff, vorteilhaft einem Faserverbundwerkstoff, wie beispielsweise einem glasfaserverstärkten Kunststoff, bestehen. Zudem könnte eine Rahmeneinheit auch zumindest teilweise aus einem austenitischen, nichtrostenden Fliegwerkstoff bestehen. Zudem könnte eine Rahmeneinheit bei einer senkrechten Betrachtung einer Haupterstreckungsebene eine beliebige, von einer rechteckigen Form und/oder Kontur, abweichende Form und/oder Kontur aufweisen, wie beispielsweise zumindest im Wesentlichen dreieckig, oval und/oder kreisrund, und vorteilhaft eine Form und/oder Kontur einer Fahrzeugkabine eines Fahrzeugs nachbilden. Zudem ist denkbar, eine Rahmeneinheit mit genau einem Seitenrahmenelement und/oder genau einem Querrahmenelement auszubilden. Auch könnte eine Rahmeneinheit eine beliebige andere Anzahl an Seitenrahmenelementen und/oder Querrahmenelementen aufweisen, wie beispielsweise zumindest drei, zumindest vier und/oder zumindest fünf Seitenrahmenelemente und/oder Querrahmenelemente. In diesem Fall können insbesondere zwei der Seitenrahmenelemente und/oder Querrahmenelemente als, insbesondere äußere, Begrenzungselemente und die weiteren Seitenrahmenelemente und/oder Querrahmenelemente als Mittenelemente ausgebildet sein und vorteilhaft zu einer Stabilisierung der Trennwandvorrichtung beitragen. Darüber hinaus ist denkbar, Querrahmenelemente und Seitenrahmenelemente separat voneinander auszubilden und beispielsweise mittels einer kraftschlüssigen und/oder formschlüssigen Verbindung miteinander zu verbinden. Dabei könnte zumindest ein Seitenrahmenelement und/oder Querrahmenelement insbesondere auch mehrteilig ausgebildet sein.

Darüber hinaus umfasst die Trennwandvorrichtung eine Trenneinheit 32a. Die Trenneinheit 32a ist zumindest im Wesentlichen formstabil ausgebildet. Die Trenneinheit 32a ist als Deckflächeneinheit ausgebildet. Die Trenneinheit 32a definiert eine weitere Haupterstreckungsebene. Die Trenneinheit 32a weist bei einer senkrechten Betrachtung der weiteren Haupterstreckungsebene eine zumindest im Wesentlichen rechteckige Kontur und/oder Form auf, welche insbesondere zu der Form und/oder Kontur der Rahmeneinheit 12a zu wenigstens einem Großteil korrespondierend ausgebildet ist. Im montierten Zustand ist die Trenneinheit 32a in dem Trenneinheitenaufnahmebereich 14a angeordnet und insbesondere dazu vorgesehen, zumindest zwei Bereiche zumindest teilweise voneinander abzutrennen. Die Trenneinheit 32a dient somit als Raumtrenner.

In einem montierten Zustand weist die Trenneinheit 32a eine Vertikalerstreckungslänge, insbesondere eine Erstreckung in die Vertikalrichtung 40a, auf, welche zumindest 30 % und höchstens 95 % der Vertikalerstreckungslänge der Rahmeneinheit 12a entspricht. Im vorliegenden Fall entspricht die Vertikalerstreckungslänge der Trenneinheit 32a etwa 80 % der Vertikalerstreckungslänge der Rahmeneinheit 12a und somit insbesondere etwa 140 cm. Ein bodennaher Bereich der Rahmeneinheit 12a ist dabei frei von einer Trenneinheit, wodurch insbesondere ein vorteilhafter Stauraum und/oder eine vorteilhafte Beinfreiheit erreicht werden kann. Zudem weist die Trenneinheit 32a im montierten Zustand eine Quererstreckungslänge, insbesondere eine Erstreckung in die Querrichtung 42a, auf, welche zumindest im Wesentlichen der Quererstreckungslänge der Rahmeneinheit 12a entspricht. Im vorliegenden Fall entspricht die Quererstreckungslänge der Trenneinheit 32a etwa 95 % der Quererstreckungslänge der Rahmeneinheit 12a und somit insbesondere etwa 142 cm.

Die Trenneinheit 32a ist ferner als nicht-tragende Struktur ausgebildet. Die Trenneinheit 32a ist an der Rahmeneinheit 12a befestigt. Dabei nimmt die Rahmeneinheit 12a zumindest einen Großteil einer Gewichtskraft, dynamische Kraft und/oder von außen wirkenden Kraft der Trenneinheit 32a auf und leitet diese in zumindest eine Tragestruktur des Fahrzeugs 10a, im vorliegenden Fall insbesondere einen Boden und eine Decke des Fahrzeugs 10a, ein. Alternativ ist jedoch auch denkbar, dass eine Krafteinleitung lediglich in einen Boden, eine Decke oder eine andere Tragestruktur eines Fahrzeugs erfolgt.

Ferner umfasst die Trenneinheit 32a im vorliegenden Fall zumindest eine Fenstereinheit 48a. Die Fenstereinheit 48a umfasst zumindest eine Sichtscheibe 50a und dient insbesondere in zumindest einem Anwendungszustand zu einer Durchsicht und/oder zu einer Betrachtung eines der Trenneinheit 32a gegenüberliegenden Sichtbereichs. Die Sichtscheibe 50a erstreckt sich dabei über zumindest 75 % einer Deckfläche der Trenneinheit 32a. Zudem erstreckt sich die Sichtscheibe 50a über die gesamte Quererstreckungslänge der Trenneinheit 32a. Im vorliegenden Fall umfasst die Fenstereinheit 48a zudem eine steuerbare Transparenzeinheit (nicht dargestellt), welche insbesondere dazu vorgesehen ist, in zumindest einem Betriebszustand eine Durchsicht durch die Sichtscheibe 50a zumindest zu erschweren und vorzugsweise weitgehend zu verhindern. Die Transparenzeinheit kann dabei als beliebige, an sich bekannte, Transparenzeinheit ausgebildet sein, wie beispielsweise als Polarisationsfolien und/oder als Flüssigkristallfolie, wie beispielsweise in der Druckschrift DE 43 19 794 C2 beschrieben, oder dergleichen.

Darüber hinaus ist die Trenneinheit 32a im vorliegenden Fall zumindest im Wesentlichen flexibel anpassbar, insbesondere an unterschiedliche Anforderungen. Dazu umfasst die Trenneinheit 32a mehrere Funktionseinheitenaufnahmebereiche 44a und/oder Funktionseinheiten 46a. Die Funktionseinheitenaufnahmebereiche 44a und/oder Funktionseinheiten 46a können dabei als beliebige Objekte ausgebildet sein, wie beispielsweise als Zeitschriftenhalterung, als Elektronikhalterung, als Halterung für ein Kinderkörbchen (sog. Baby Bassinet), als Abstelleinheit, als Anzeigeeinheit, als Unterhaltungseinheit und/oder als Beleuchtungseinheit. Alternativ könnte eine Trenneinheit auch eine beliebige andere Form und/oder Kontur aufweisen. Zudem könnte eine Trenneinheit zumindest teilweise formflexibel ausgebildet sein, beispielsweise bei Verwendung einer Folie und/oder eines Stoffs. Ferner ist denkbar, auf eine Fenstereinheit, eine Transparenzeinheit, einen Funktionseinheitenaufnahmebereich und/oder eine Funktionseinheit zu verzichten. Zudem könnte eine Trenneinheit prinzipiell auch mehrere, insbesondere kleinflächige, Fenstereinheiten aufweisen.

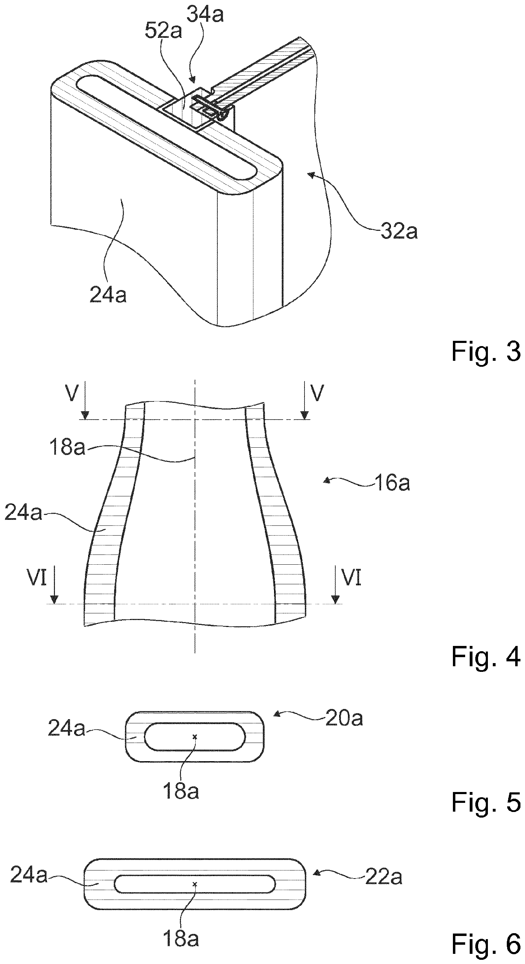

Figur 3 zeigt eine Befestigungsmethode zur Befestigung der Trenneinheit 32a an der Rahmeneinheit 12a. Hierzu umfasst die Rahmeneinheit 12a eine Befestigungseinheit 34a. Die Befestigungseinheit 34a ist auf einer der Trenneinheit 32a zugewandten Seite der Rahmeneinheit 12a angeordnet. Die Befestigungseinheit 34a erstreckt sich dabei zu wenigstens einem Großteil um eine äußere Kontur der Trenneinheit 32a. Die Befestigungseinheit 34a ist im vorliegenden Fall zumindest zu einer formschlüssigen Befestigung der Trenneinheit 32a vorgesehen. Zudem ist die Befestigungseinheit 34a zu einer kraftschlüssigen Befestigung der Trenneinheit 32a vorgesehen. Im vorliegenden Fall ist die Trenneinheit 32a mittels einer Schraubverbindung an einem, insbesondere zumindest im Wesentlichen L-förmigen, Verbindungselement 52a der Befestigungseinheit 34a befestigt, wobei das Verbindungselement 52a insbesondere kraft- und/oder formschlüssig mit den Seitenrahmenelementen 24a, 26a und/oder dem zweiten Querrahmenelement 30a verbunden ist. Alternativ oder zusätzlich ist denkbar, dass eine Befestigungseinheit zu einer stoffschlüssigen Verbindung einer Trenneinheit vorgesehen ist. Zudem ist denkbar, eine von einer Schraubverbindung abweichende Verbindungsmethode, wie beispielsweise eine Klemmverbindung und/oder eine Rastverbindung zu verwenden.

Insbesondere um eine Designflexibilität und/oder eine Stabilität der Rahmeneinheit 12a zu erhöhen, umfasst die Rahmeneinheit 12a im vorliegenden Fall ferner einen Rahmenabschnitt 16a, welcher entlang einer in dem Rahmenabschnitt 16a und entlang des Rahmenabschnitts 16a verlaufenden Rahmenmittellinie 18a betrachtet zumindest zwei in Richtung der Rahmenmittellinie 18a versetzte und senkrecht zu der Rahmenmittellinie 18a angeordnete Rahmenquerschnitte 20a, 22a aufweist, welche wesentlich verschieden voneinander sind (vgl. insbesondere auch Figuren 4 bis 6). Im vorliegenden Fall weist der Rahmenabschnitt 16a entlang der Rahmenmittellinie 18a betrachtet eine Vielzahl, insbesondere zumindest zehn, in Richtung der Rahmenmittellinie 18a versetzte und senkrecht zu der Rahmenmittellinie 18a angeordnete Rahmenquerschnitte 20a, 22a auf.

Der Rahmenabschnitt 16a ist in einem von einem Eckbereich verschiedenen Bereich der Rahmeneinheit 12a angeordnet. Im vorliegenden Fall ist der Rahmenabschnitt 16a vollständig in zumindest einem der Seitenrahmenelemente 24a, 26a angeordnet. Der Rahmenabschnitt 16a entspricht somit einem als Hohlprofil ausgebildeten Rahmenabschnitt. Der Rahmenabschnitt 16a ist dabei in einem bodennahen Bereich der Rahmeneinheit 12a angeordnet. Der Rahmenabschnitt 16a weist eine Vertikalerstreckungslänge, insbesondere eine Erstreckung in die Vertikalrichtung 40a, auf, welche höchstens 40 %, vorteilhaft höchstens 30 % und besonders bevorzugt höchstens 20 %, der Vertikalerstreckungslänge der Rahmeneinheit 12a entspricht. Der Rahmenabschnitt 16a ist ferner einstückig ausgebildet. Demnach ist der Rahmenabschnitt 16a insbesondere untrennbar ausgebildet.

Zudem weist der Rahmenabschnitt 16a zumindest in einer Richtung parallel zu einer Haupterstreckungsebene des Trenneinheitenaufnahmebereichs 14a und insbesondere parallel zu einem Boden des Fahrzeugs 10a betrachtet einen von einem geraden Verlauf abweichenden Verlauf auf. Der Rahmenabschnitt 16a ist dabei gekrümmt und/oder gebogen ausgebildet und weist insbesondere zumindest eine Rahmenkrümmung und/oder Rahmenbiegung auf. Alternativ ist denkbar, dass eine Rahmeneinheit zumindest im Wesentlichen frei von wesentlich verschiedenen Rahmenquerschnitten ist oder zumindest in einer Richtung parallel zu einer Haupterstreckungsebene eines Trenneinheitenaufnahmebereichs und insbesondere parallel zu einem Boden eines Fahrzeugs betrachtet einen geraden Verlauf aufweist.

Die Figuren 5 und 6 zeigen die zumindest zwei wesentlich verschiedenen Rahmenquerschnitte 20a, 22a. Die Rahmenquerschnitte 20a, 22a weisen eine selbe Außenform und/oder Außenkontur auf. Die Rahmenquerschnitte 20a, 22a weisen im vorliegenden Fall eine zumindest im Wesentlichen elliptische Außenform und/oder Außenkontur auf. Die Rahmenquerschnitte 20a, 22a weisen im vorliegenden Fall wesentlich verschiedene Außendurchmesser auf. Zudem weisen die Rahmenquerschnitte 20a, 22a jeweils eine zentrale Ausnehmung auf. Dabei weisen die Rahmenquerschnitte 20a, 22a eine selbe Innenform und/oder Innenkontur auf. Die Rahmenquerschnitte 20a, 22a weisen im vorliegenden Fall eine zumindest im Wesentlichen elliptische Innenform und/oder Innenkontur auf. Die Rahmenquerschnitte 20a, 22a weisen im vorliegenden Fall wesentlich verschiedene Innendurchmesser auf. Darüber hinaus weisen die Rahmenquerschnitte 20a, 22a im vorliegenden Fall wesentlich verschiedene maximale Wanddicken auf. Alternativ könnten Rahmenquerschnitte eine beliebige andere Außenform und/oder Außenkontur und/oder Innenform und/oder Innenkontur aufweisen, wie beispielsweise kreisförmig, eckig und/oder sternförmig. Insbesondere könnte eine Außenform und/oder Außenkontur auch von einer Innenform und/oder Innenkontur abweichen. Darüber hinaus ist denkbar, dass Rahmenquerschnitte denselben Außendurchmesser, Innendurchmesser und/oder dieselbe maximale Wanddicke aufweisen.

Ein erster Rahmenquerschnitt 20a der Rahmenquerschnitte 20a, 22a weist im vorliegenden Fall einen Außendurchmesser von etwa 70 mm auf. Eine maximale erste Erstreckungslänge des ersten Rahmenquerschnitts 20a, insbesondere in Richtung einer, insbesondere hypothetischen, großen Halbachse, beträgt demnach etwa 70 mm. Eine maximale zweite Erstreckungslänge des ersten Rahmenquerschnitts 20a, insbesondere in Richtung einer, insbesondere hypothetischen, kleinen Halbachse, beträgt etwa 30 mm. Zudem weist der erste Rahmenquerschnitt 20a im vorliegenden Fall einen Innendurchmesser von etwa 18 mm auf. Eine Wandstärke des ersten Rahmenquerschnitts 20a ist zumindest im Wesentlichen konstant. Eine Wandstärke des ersten Rahmenquerschnitts 20a beträgt etwa 6 mm.

Ein zweiter Rahmenquerschnitt 22a der Rahmenquerschnitte 20a, 22a weist im vorliegenden Fall einen Außendurchmesser von etwa 130 mm auf. Eine maximale erste Erstreckungslänge des zweiten Rahmenquerschnitts 22a, insbesondere in Richtung einer, insbesondere hypothetischen, großen Halbachse, beträgt demnach etwa 130 mm. Eine maximale zweite Erstreckungslänge des zweiten Rahmenquerschnitts 22a, insbesondere in Richtung einer, insbesondere hypothetischen, kleinen Halbachse, beträgt etwa 30 mm. Zudem weist der zweite Rahmenquerschnitt 22a im vorliegenden Fall einen Innendurchmesser von etwa 14 mm auf. Eine Wandstärke des zweiten Rahmenquerschnitts 22a ist zumindest im Wesentlichen konstant. Eine Wandstärke des zweiten Rahmenquerschnitts 22a beträgt etwa 8 mm.

Die Rahmenquerschnitte 20a, 22a weichen somit in zumindest einer Erstreckungslänge mit einem Längenanteil von zumindest 20 % voneinander ab. In diesem Zusammenhang sei auch angemerkt, dass sämtliche hier aufgeführte Werte und/oder Größen lediglich ein mögliches Ausführungsbeispiel der Trennwandvorrichtung beschreiben, jedoch keinesfalls einschränkend zu werten sind.

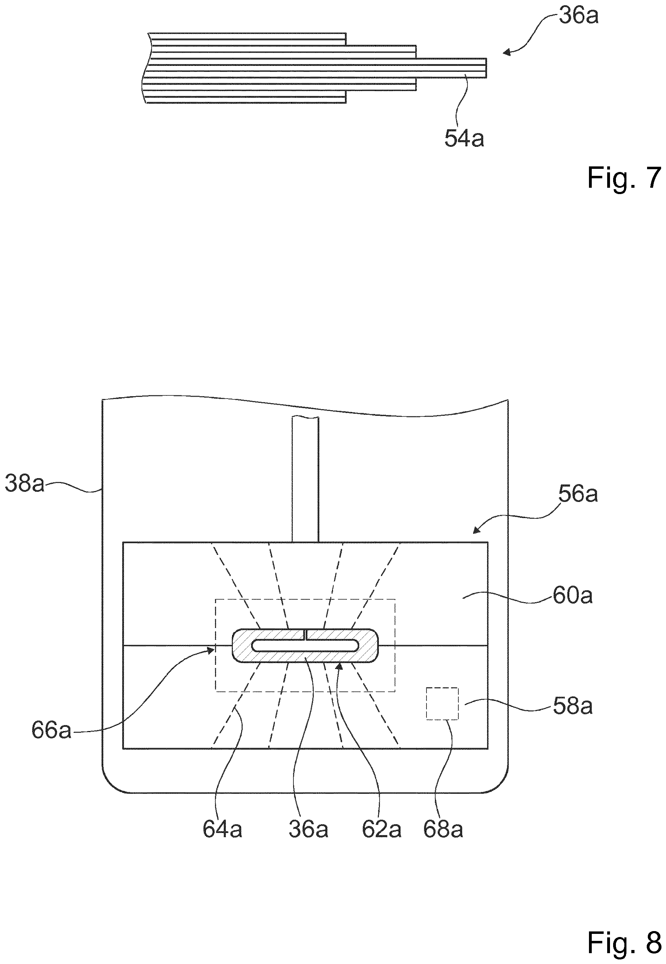

Die Figuren 7 und 8 zeigen ferner ein beispielhaftes Verfahren zur Herstellung der Trennwandvorrichtung und insbesondere der Rahmeneinheit 12a mittels einer Trennwandherstellvorrichtung.

Figur 7 zeigt ein Teil eines Vorprodukts 36a der Rahmeneinheit 12a in einer Seitenansicht. Das Vorprodukt 36a umfasst mehrere Materiallagen 54a. Die Materiallagen 54a entsprechen Kunststofflagen. Die Materiallagen 54a bestehen im vorliegenden Fall aus mit Kunstharz imprägnierten Glasfasergeweben, sogenannten "Prepregs". Die Materiallagen 54a sind übereinander angeordnet. Die Materiallagen 54a sind im vorliegenden Fall versetzt übereinander angeordnet. Dabei wird abhängig von einer gewünschten Wanddicke und/oder Wandstärke der herzustellenden Rahmeneinheit 12a und/oder zu einer Einstellung einer Wanddicke und/oder Wandstärke der herzustellenden Rahmeneinheit 12a eine unterschiedliche Anzahl an Materiallagen 54a übereinander angeordnet, insbesondere übereinander geschichtet. Alternativ oder zusätzlich ist denkbar, zwischen Kunststofflagen Aluminiumlagen oder dergleichen anzuordnen, wodurch insbesondere eine Stabilität weiter verbessert werden kann. Auch ist denkbar, zusätzlich Klebstoffe und/oder Klebeharze zwischen die Materiallagen einzubringen.

Figur 8 zeigt eine beispielhafte Trennwandherstellvorrichtung in einer schematischen Darstellung.

Die Trennwandherstellvorrichtung umfasst einen Behälter 38a. Der Behälter 38a ist als Druckbehälter, im vorliegenden Fall insbesondere als Autoklav, ausgebildet.

Die Trennwandherstellvorrichtung umfasst ferner zumindest ein, insbesondere in dem Behälter 38a angeordnetes und/oder anordenbares, Formwerkzeug 56a. Das Formwerkzeug 56a weist ein erstes Formwerkzeugteil 58a und ein, insbesondere zu einem Öffnen des Formwerkzeugs 56a, von dem ersten Formwerkzeugteil 58a trennbares, zweites Formwerkzeugteil 60a auf. Das Formwerkzeug 56a weist eine zwischen den Formwerkzeugteilen 58a, 60a angeordnete Kavität 62a zur Aufnahme des Vorprodukts 36a auf. Die Kavität 62a entspricht dabei einer Negativform der herzustellenden Rahmeneinheit 12a und/oder eines herzustellenden Rahmenabschnitts der Rahmeneinheit 12a, vorteilhaft des Rahmenabschnitts 16a.

Darüber hinaus umfasst das Formwerkzeug 56a zumindest einen Vakuumkanal 64a. Der zumindest eine Vakuumkanal 64a weist eine Verbindung zu der Kavität 62a auf. Der zumindest eine Vakuumkanal 64a dient dabei zu einem Ansaugen und/oder Fixieren des Vorprodukts 36a in der Kavität 62a.

Darüber hinaus umfasst das Formwerkzeug 56a eine Temperiereinheit 66a. Die Temperiereinheit 66a weist eine thermische Verbindung mit der Kavität 62a auf. Die Temperiereinheit 66a ist zu einer Erwärmung und/oder Abkühlung des Vorprodukts 36a vorgesehen. Im vorliegenden Fall ist die Temperiereinheit 66a zu einer Vortemperierung des Vorprodukts 36a vorgesehen. Die Temperiereinheit 66a kann dabei als beliebige Temperiereinheit ausgebildet sein, wie beispielsweise als elektrischer Heizwiderstand und/oder als Fluidkanal.

Ferner umfasst das Formwerkzeug 56a eine Überdruckeinheit 68a. Die Überdruckeinheit 68a weist eine Wirkverbindung mit der Kavität 62a auf. Die Überdruckeinheit 68a ist zu einer Beaufschlagung des Vorprodukts 36a, insbesondere eines inneren Hohlraums des Vorprodukts 36a, mit einem Druck von zumindest 4 bar und vorteilhaft zumindest 5 bar vorgesehen.

Das Verfahren zur Herstellung der Rahmeneinheit 12a entspricht zumindest teilweise einem Vernetzungsverfahren. Dabei wird das Vorprodukt 36a zur Formgebung in die Kavität 62a eingelegt. Anschließend wird mittels eines Unterdrucks das Vorprodukt 36a in der Kavität 62a fixiert. In einem darauf folgenden Schritt wird im Inneren der Kavität 62a ein Überdruck mit bis zu 5 bar erzeugt. Zusätzlich wird eine Temperatur des Vorprodukts 36a mittels der Temperiereinheit 66a auf 30°C bis 60°C, im vorliegenden Fall insbesondere etwa 40°C, erhöht, wodurch das Vorprodukt 36a insbesondere geschmeidig und/oder klebrig wird und sich vorteilhaft leicht in die Kavität 62a einlegen lässt. Anschließend wird eine Temperatur in dem Behälter 38a, insbesondere zu einer Vernetzung der Materialien und/oder zum Aushärten des Vorprodukts 36a, auf eine Temperatur von etwa 130°C erhöht. Nach einer Abkühlung und eines Absenken des Drucks, vorteilhaft mittels der Überdruckeinheit 68a, kann das Vorprodukt 36a und/oder das hergestellte Teil der Rahmeneinheit 12a aus dem Formwerkzeug 56a entnommen werden und zu der Rahmeneinheit 12a zusammengefügt werden. Alternativ könnte eine Erwärmung eines Vorprodukts, insbesondere auf eine Temperatur von über 100°C, auch unmittelbar mittels einer Temperiereinheit erfolgen. Zudem könnte prinzipiell auf eine Vorerwärmung des Vorprodukts auch verzichtet werden. Ferner ist denkbar, eine Rahmeneinheit in einer Sandwichbauweise herzustellen, insbesondere als Wabenplatte in einer Honeycomb-Bauweise, vorteilhaft einer Honeycomb-Prepreg-Bauweise, und/oder einer Schlauchbauweise, wie beispielsweise in der Druckschrift DE 1 756 810 A1 beschrieben.

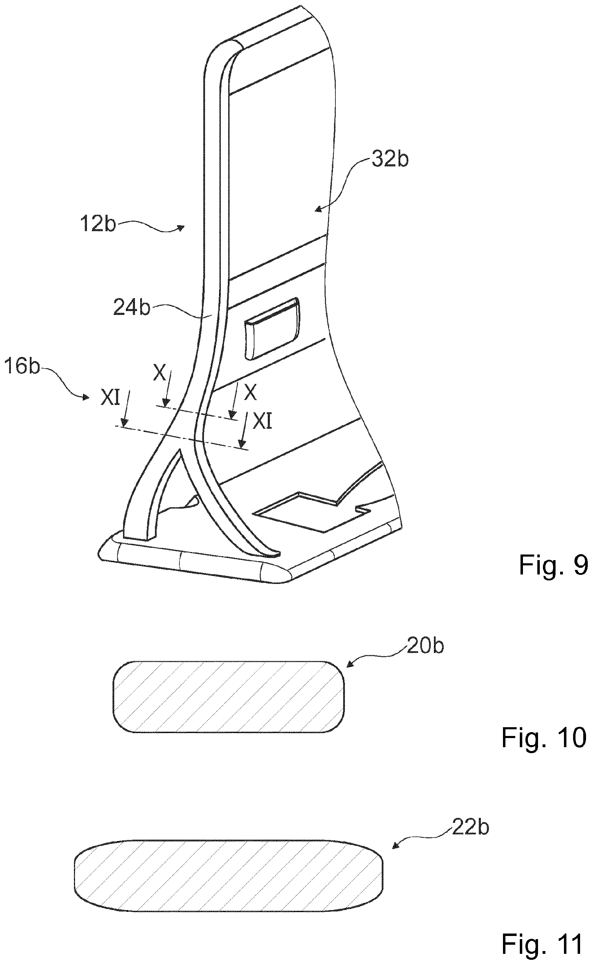

In den Figuren 9 bis 19 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 8, verwiesen werden kann. Zur Unterscheidung der Ausführungsbeispiele ist der Buchstabe a den Bezugszeichen des Ausführungsbeispiels in den Figuren 1 bis 8 nachgestellt. In den Ausführungsbeispielen der Figuren 9 bis 19 ist der Buchstabe a durch die Buchstaben b bis f ersetzt.

Die Figuren 9 bis 11 zeigen ein weiteres Ausführungsbeispiel der Erfindung. Dem Ausführungsbeispiel der Figuren 9 bis 11 ist der Buchstabe b nachgestellt. Das weitere Ausführungsbeispiel der Figuren 9 bis 11 unterscheidet sich von dem vorherigen Ausführungsbeispiel zumindest im Wesentlichen durch eine Ausgestaltung einer Rahmeneinheit 12b.

Im vorliegenden Fall ist die Rahmeneinheit 12b, insbesondere zumindest ein in einem Seitenrahmenelement 24b angeordneter Rahmenabschnitt 16b der Rahmeneinheit 12b, als Vollprofil ausgebildet und weist insbesondere einen mehrschichtigen Aufbau auf.

Die Figuren 10 und 11 zeigen analog zu dem vorherigen Ausführungsbeispiel wiederum zumindest zwei wesentlich verschiedenen Rahmenquerschnitte 20b, 22b des Rahmenabschnitts 16b. Die Rahmenquerschnitte 20b, 22b weisen dabei wesentlich verschiedene Außendurchmesser auf. Dabei variieren eine Längserstreckung und eine Quererstreckung der Rahmenquerschnitte 20b, 22b. Zudem weisen die Rahmenquerschnitte 20b, 22b eine zumindest im Wesentlichen verschiedene Materialstärke auf. Alternativ könnte eine Längserstreckung oder eine Quererstreckung von Rahmenquerschnitten auch zumindest im Wesentlichen identisch sein.

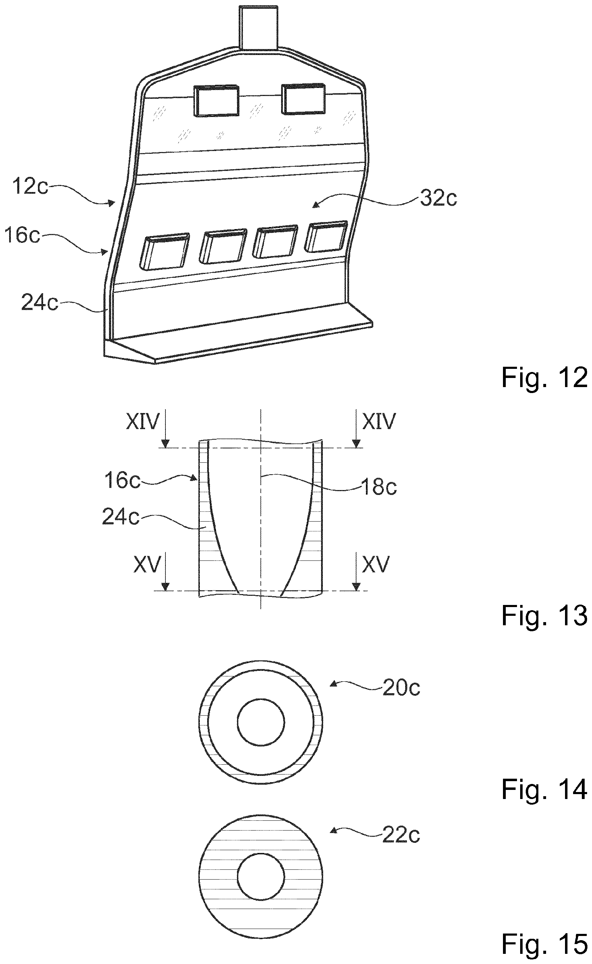

In den Figuren 12 bis 15 ist ein weiteres Ausführungsbeispiel der Erfindung gezeigt. Dem Ausführungsbeispiel der Figuren 12 bis 15 ist der Buchstabe c nachgestellt. Das weitere Ausführungsbeispiel der Figuren 12 bis 15 unterscheidet sich von den vorherigen Ausführungsbeispielen zumindest im Wesentlichen durch eine Ausgestaltung einer Rahmeneinheit 12c.

Im vorliegenden Fall ist die Rahmeneinheit 12c, insbesondere zumindest ein in einem Seitenrahmenelement 24c angeordneter Rahmenabschnitt 16c der Rahmeneinheit 12c, als Hohlprofil ausgebildet. Die Rahmeneinheit 12c ist, insbesondere vollständig, einstückig ausgebildet. Die Rahmeneinheit 12c besteht dabei zu wenigstens einem Großteil aus einem Faserverbundwerkstoff, insbesondere einem Faserverbundkunststoff.

Die Figuren 13 bis 15 zeigen wiederum zumindest zwei wesentlich verschiedenen Rahmenquerschnitte 20c, 22c des Rahmenabschnitts 16c. Die Rahmenquerschnitte 20c, 22c weisen im vorliegenden Fall eine zumindest im Wesentlichen kreisrunde Außenform und/oder Außenkontur auf. Die Rahmenquerschnitte 20c, 22c weisen dabei zumindest im Wesentlichen identische Außendurchmesser auf. Alternativ könnte sich ein Außendurchmesser von Rahmenquerschnitten jedoch auch ändern.

Zudem weisen die Rahmenquerschnitte 20c, 22c eine zumindest im Wesentlichen kreisrunde Innenform und/oder Innenkontur auf. Die Rahmenquerschnitte 20c, 22c weisen im vorliegenden Fall wesentlich verschiedene Innendurchmesser auf. Darüber hinaus weisen die Rahmenquerschnitte 20c, 22c im vorliegenden Fall wesentlich verschiedene maximale Wanddicken auf.

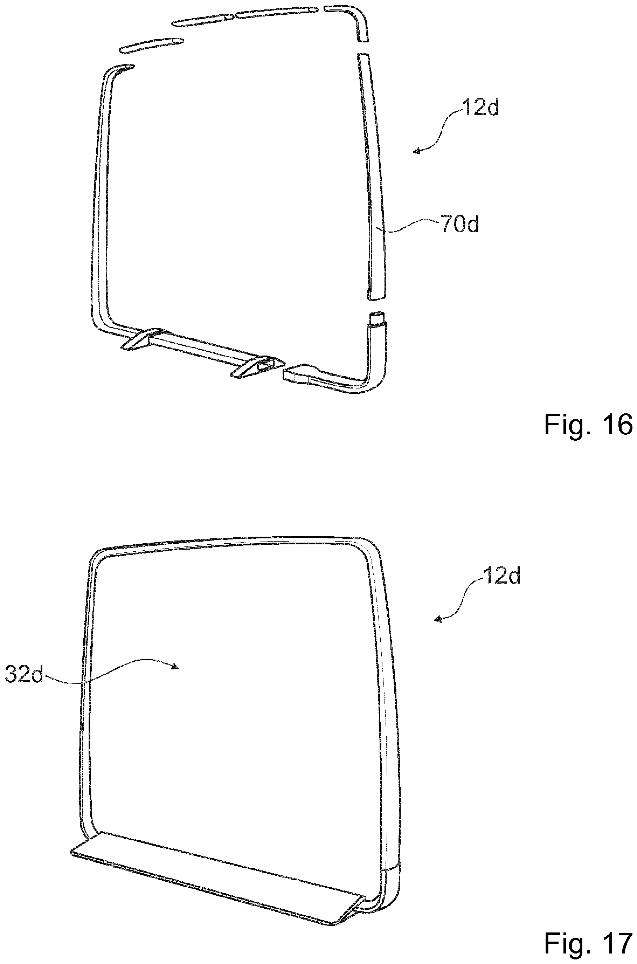

In den Figuren 16 und 17 ist ein weiteres Ausführungsbeispiel der Erfindung gezeigt. Dem Ausführungsbeispiel der Figuren 16 und 17 ist der Buchstabe d nachgestellt. Das weitere Ausführungsbeispiel der Figuren 16 und 17 unterscheidet sich von den vorherigen Ausführungsbeispielen zumindest im Wesentlichen durch eine Ausgestaltung einer Rahmeneinheit 12d.

In diesem Fall ist die Rahmeneinheit 12d modular aufgebaut und umfasst eine Mehrzahl, insbesondere zusammensteckbarer, Rahmenelemente 70d, wobei in Figur 16 der Übersichtlichkeit halber lediglich eines der Rahmenelemente 70d mit Bezugszeichen versehen ist. Die Rahmenelemente 70d können dabei unterschiedliche Längen, Durchmesser und/oder Winkelverläufe aufweisen.

Eine Trenneinheit 32d ist im vorliegenden Fall ferner als Wandelement ausgebildet.

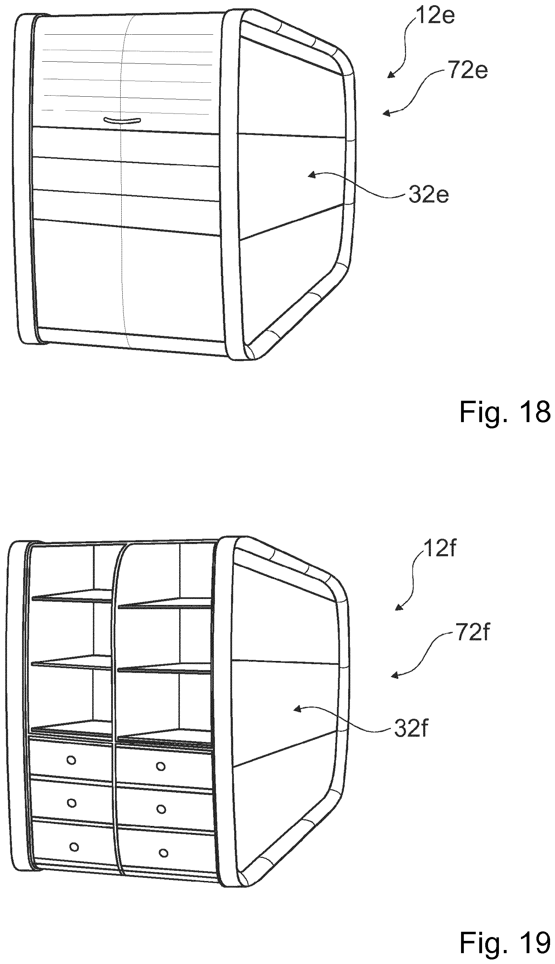

Figur 18 zeigt ein weiteres Ausführungsbeispiel der Erfindung. Dem Ausführungsbeispiel der Figur 18 ist der Buchstabe e nachgestellt. Das weitere Ausführungsbeispiel der Figur 18 unterscheidet sich von den vorherigen Ausführungsbeispielen zumindest im Wesentlichen durch eine Verwendung einer Trennwandvorrichtung.

Figur 18 zeigt eine als Schrank und/oder Stowage ausgebildete Stauraumeinheit 72e mit zwei parallel zueinander angeordneten Trennwandvorrichtungen.

Jede der Trennwandvorrichtungen umfasst dabei zumindest eine Rahmeneinheit 12e sowie eine Trenneinheit 32e, wobei insbesondere in Figur 18 der Übersichtlichkeit halber lediglich eine der Trennwandvorrichtungen mit Bezugszeichen versehen ist.

Die Trennwandvorrichtungen sind dabei derart angeordnet und miteinander verbunden, dass ein, im vorliegenden Fall geschlossener, Stauraum zwischen den Trennwandvorrichtungen erzeugt wird.

Figur 19 zeigt ein weiteres Ausführungsbeispiel der Erfindung. Dem Ausführungsbeispiel der Figur 19 ist der Buchstabe f nachgestellt. Das weitere Ausführungsbeispiel der Figur 19 unterscheidet sich von den vorherigen Ausführungsbeispielen zumindest im Wesentlichen durch eine Verwendung einer Trennwandvorrichtung.

Figur 19 zeigt eine als Schrank und/oder Stowage ausgebildete Stauraumeinheit 72f mit zwei parallel zueinander angeordneten Trennwandvorrichtungen.

Jede der Trennwandvorrichtungen umfasst dabei zumindest eine Rahmeneinheit 12f sowie eine Trenneinheit 32f, wobei insbesondere in Figur 19 der Übersichtlichkeit halber lediglich eine der Trennwandvorrichtungen mit Bezugszeichen versehen ist.

Die Trennwandvorrichtungen sind dabei derart angeordnet und miteinander verbunden, dass ein, im vorliegenden Fall teilweise offener, Stauraum zwischen den Trennwandvorrichtungen erzeugt wird.

## Patentansprüche

1. Luftfahrzeugtrennwandvorrichtung mit zumindest einer Rahmeneinheit (12a; 12b; 12c), welche zumindest in einem montierten Zustand zumindest einen Trenneinheitenaufnahmebereich (14a) definiert, und welche zumindest einen, zumindest einen Teil der Rahmeneinheit (12a; 12b; 12c) ausbildenden Rahmenabschnitt (16a; 16b; 16c) aufweist, **dadurch gekennzeichnet, dass** der Rahmenabschnitt (16a; 16b; 16c) entlang einer in dem Rahmenabschnitt (16a; 16b; 16c) und entlang des Rahmenabschnitts (16a; 16b; 16c) verlaufenden Rahmenmittellinie (18a; 18c) betrachtet zumindest zwei Rahmenquerschnitte (20a, 22a; 20b, 22b; 20c, 22c) aufweist, wobei sich die Formen der beiden Rahmenquerschnitte (20a, 22a; 20b, 22b; 20c, 22c) bei einer Betrachtung in Richtung der Rahmenmittellinie um zumindest 5 % voneinander unterscheiden und wobei der Rahmenabschnitt (16a; 16b; 16c) einstückig ausgebildet ist, wobei die Rahmeneinheit (12a; 12b; 12c) zumindest ein im montierten Zustand zumindest im Wesentlichen vertikal angeordnetes Seitenrahmenelement (24a, 26a; 24b; 24c) und zumindest ein zumindest im Wesentlichen senkrecht zu dem Seitenrahmenelement (24a, 26a; 24b; 24c) angeordnetes Querrahmenelement (28a, 30b) aufweist, wobei der Rahmenabschnitt (16a; 16b; 16c) in einem von einem Eckbereich verschiedenen Bereich der Rahmeneinheit (12a; 12b; 12c) angeordnet ist und wobei der Rahmenabschnitt (16a; 16b; 16c) vollständig in dem Seitenrahmenelement (24a, 26a; 24b; 24c) oder vollständig in dem Querrahmenelement (28a, 30b) angeordnet ist.

2. Luftfahrzeugtrennwandvorrichtung nach Anspruch 1, **dadurch gekennzeichnet, dass** die Rahmenquerschnitte (20a, 22a; 20b, 22b) wesentlich verschiedene Außendurchmesser aufweisen.

3. Luftfahrzeugtrennwandvorrichtung nach Anspruch 1 oder 2, **dadurch gekennzeichnet, dass** die Rahmenquerschnitte (20a, 22a; 20c, 22c) wesentlich verschiedene Innendurchmesser aufweisen.

4. Luftfahrzeugtrennwandvorrichtung nach einem der vorhergehenden Ansprüche, **dadurch gekennzeichnet, dass** die Rahmenquerschnitte (20a, 22a; 20c, 22c) wesentlich verschiedene maximale Wanddicken aufweisen.

5. Luftfahrzeugtrennwandvorrichtung nach einem der vorhergehenden Ansprüche, **dadurch gekennzeichnet, dass** der Rahmenabschnitt (16a; 16b; 16c) zumindest in einer Richtung parallel zu einer Haupterstreckungsebene des Trenneinheitenaufnahmebereichs (14a) betrachtet einen gekrümmten und/oder gebogenen Verlauf aufweist.

6. Luftfahrzeugtrennwandvorrichtung nach einem der vorhergehenden Ansprüche, **dadurch gekennzeichnet, dass** der Rahmenabschnitt (16a; 16b; 16c) in einem montierten Zustand in einem bodennahen Bereich der Rahmeneinheit (12a; 12b; 12c) angeordnet ist.

7. Luftfahrzeugtrennwandvorrichtung nach einem der vorhergehenden Ansprüche, **gekennzeichnet durch** zumindest eine in dem Trenneinheitenaufnahmebereich (14a) angeordnete Trenneinheit (32a; 32b; 32c), wobei die Rahmeneinheit (12a; 12b; 12c) dazu vorgesehen ist, zumindest einen Großteil einer Gewichtskraft der Trenneinheit (32a; 32b; 32c) aufzunehmen.

8. Luftfahrzeugtrennwandvorrichtung nach Anspruch 7, **dadurch gekennzeichnet, dass** die Rahmeneinheit (12a; 12b; 12c) auf einer der Trenneinheit (32a; 32b; 32c) zugewandten Seite zumindest eine Befestigungseinheit (34a) aufweist, welche zumindest zu einer formschlüssigen Befestigung der Trenneinheit (32a; 32b; 32c) vorgesehen ist.

9. Luftfahrzeugtrennwandvorrichtung nach Anspruch 7 oder 8, **dadurch gekennzeichnet, dass** eine Vertikalerstreckungslänge der Trenneinheit (32a; 32b) im montierten Zustand zumindest 30 % und/oder höchstens 95 % einer Vertikalerstreckungslänge der Rahmeneinheit (12a; 12b) entspricht.

10. Luftfahrzeugtrennwandvorrichtung nach einem der Ansprüche 7 bis 9, **dadurch gekennzeichnet, dass** die Trenneinheit (32a; 32b; 32c) zumindest im Wesentlichen formstabil ausgebildet ist.

11. Luftfahrzeug mit zumindest einer Trennwandvorrichtung nach einem der vorhergehenden Ansprüche.

12. Verfahren zur Herstellung einer Luftfahrzeugtrennwandvorrichtung nach einem der Ansprüche 1 bis 10, wobei zumindest ein Teil eines Vorprodukts (36a) der Rahmeneinheit (12a) zur Formgebung der Rahmeneinheit (12a) in einem Behälter (38a) mit einem Überdruck beaufschlagt und erwärmt wird.

## Claims

1. Separating wall device of an aircraft, with at least one frame unit (12a; 12b; 12c) which at least in a mounted state defines at least one separating unit receiving region (14a) and which comprises at least one frame section (16a; 16b; 16c) forming at least a portion of the frame unit (12a; 12b; 12c),
**characterised in that** viewed along a frame middle line (18a; 18c) extending in the frame section (16a; 16b; 16c) and along the frame section (16a; 16b; 16c), the frame section (16a; 16b; 16c) has at least two frame cross sections (20a, 22a; 20b, 22b; 20c, 22c) wherein, viewed along the frame middle line, the shapes of the two frame cross sections (20a, 22a; 20b, 22b; 20c, 22c) differ from each other by at least 5 %, and wherein the frame section (16a; 16b; 16c) is embodied in a one-part implementation, wherein the frame unit (12a; 12b; 12c) comprises at least one side frame element (24a, 26a; 24b; 24c), which is in a mounted state arranged at least substantially vertically, and comprises at least one transverse frame element (28a, 30b), which is arranged at least substantially perpendicularly to the side frame element (24a, 26a; 24b; 24c), wherein the frame section (16a; 16b; 16c) is arranged in a region of the frame unit (12a; 12b; 12c) that is different from a corner region, and wherein the frame section (16a; 16b; 16c) is arranged completely in the side frame element (24a, 26a; 24b; 24c) or completely in the transverse frame element (28a, 30b).

2. Separating wall device of an aircraft according to claim 1,
**characterised in that** the frame cross sections (20a, 22a; 20b, 22b) have essentially differing outer diameters.

3. Separating wall device of an aircraft according to claim 1 or 2,
**characterised in that** the frame cross sections (20a, 22a; 20c, 22c) have essentially differing inner diameters.

4. Separating wall device of an aircraft according to one of the preceding claims,
**characterised in that** the frame cross sections (20a, 22a; 20c, 22c) have essentially differing maximum wall thicknesses.

5. Separating wall device of an aircraft according to one of the preceding claims,
**characterised in that** viewed at least in a direction that is parallel to a main extension plane of the separating unit receiving region (14a), the frame section (16a; 16b; 16c) has a curved and/or bent course.

6. Separating wall device of an aircraft according to one of the preceding claims,
**characterised in that** the frame section (16a; 16b; 16c) is in a mounted state arranged in a region of the frame unit (12a; 12b; 12c) that is near a bottom.

7. Separating wall device of an aircraft according to one of the preceding claims,
**characterised by** at least one separating unit (32a; 32b; 32c) arranged in the separating unit receiving region (14a), wherein the frame unit (12a; 12b; 12c) is configured for receiving at least a large portion of a weight force of the separating unit (32a; 32b; 32c).

8. Separating wall device of an aircraft according to claim 7,
**characterised in that** the frame unit (12a; 12b; 12c) comprises on a side facing toward the separating unit (32a; 32b; 32c) at least one fixation unit (34a), which is configured at least for a form-fit fixation of the separating unit (32a; 32b; 32c).

9. Separating wall device of an aircraft according to claim 7 or 8,
**characterised in that** a vertical extension length of the separating unit (32a; 32b) is in the mounted state equivalent to minimally 30 % and/or maximally 95 % of a vertical extension length of the frame unit (12a; 12b).

10. Separating wall device of an aircraft according to one of claims 7 to 9,
**characterised in that** the separating unit (32a; 32b; 32c) is implemented so as to be at least substantially dimensionally stable.

11. Aircraft with at least one separating wall device according to one of the preceding claims.

12. Method for producing a separating wall device of an aircraft according to one of claims 1 to 10 wherein, for a shaping of the frame unit (12a), at least a portion of a semi-finished product (36a) of the frame unit (12a) is subjected to an overpressure and heated in a container (38a).

## Revendications

1. Dispositif de cloison d'aéronef, avec au moins une unité cadre (12a ; 12b ; 12c), qui au moins en état monté définit au moins une zone recevant d'unités de cloisonnement (14a) et qui comprend au moins une section de cadre (16a ; 16b ; 16c) formant au moins une partie de l'unité cadre (12a ; 12b ; 12c),
**caractérisé en ce que** vue le long d'une ligne centrale de cadre (18a ; 18c) s'étendant dans la section de cadre (16a ; 16b ; 16c) et le long de la section de cadre (16a ; 16b ; 16c), la section de cadre (16a ; 16b ; 16c) comporte au moins deux coupes transversales de cadre (20a, 22a ; 20b, 22b ; 20c, 22c), où, vues dans la direction de la ligne centrale de cadre, les formes des deux coupes transversales de cadre (20a, 22a ; 20b, 22b ; 20c, 22c) diffèrent par au moins 5 % l'une de l'autre, et où la section de cadre (16a ; 16b ; 16c) est implémentée d'une pièce,
où l'unité cadre (12a ; 12b ; 12c) comprend au moins un élément de cadre latéral (24a, 26a ; 24b ; 24c) qui est en état monté disposé au moins sensiblement verticalement, et comprend au moins un élément de cadre transversal (28a, 30b) disposé au moins sensiblement perpendiculairement à l'élément de cadre latéral (24a, 26a ; 24b ; 24c),
où la section de cadre (16a ; 16b ; 16c) est disposée dans une zone de l'unité cadre (12a ; 12b ; 12c) différant d'une zone de coin, et où
la section de cadre (16a ; 16b ; 16c) est disposée complètement dans l'élément de cadre latéral (24a, 26a ; 24b ; 24c) ou complétement dans l'élément de cadre transversal (28a ; 30b).

2. Dispositif de cloison d'aéronef selon la revendication 1,
**caractérisé en ce que** les coupes transversales de cadre (20a, 22a ; 20b, 22b) présentent des diamètres extérieurs sensiblement différents.

3. Dispositif de cloison d'aéronef selon la revendication 1 ou 2,
**caractérisé en ce que** les coupes transversales de cadre (20a, 22a ; 20c, 22c) présentent de diamètres intérieurs sensiblement différents.

4. Dispositif de cloison d'aéronef selon l'une des revendications précédentes,
**caractérisé en ce que** les coupes transversales (20a, 22a ; 20c, 22c) présentent des épaisseurs de cloison maximales qui sont sensiblement différentes.

5. Dispositif de cloison d'aéronef selon l'une des revendications précédentes,
**caractérisé en ce que** vue dans au moins une direction qui est parallèle à un plan d'étendue principale de la zone recevant d'unités de cloisonnement (14a), la section de cadre (16a ; 16b ; 16c) présente un cours courbé et/ou fléchi.

6. Dispositif de cloison d'aéronef selon l'une des revendications précédentes,
**caractérisé en ce que** la section de cadre (16a ; 16b ; 16c) est en état monté disposée dans une zone de l'unité cadre (12a ; 12b ; 12c) près du fond.

7. Dispositif de cloison d'aéronef selon l'une des revendications précédentes,
**caractérisé par** au moins une unité de cloisonnement (32a ; 32b ; 32c) disposée dans la zone recevant d'unités de cloisonnement (14a), l'unité cadre (12a ; 12b ; 12c) étant prévue à recevoir au moins une grande partie d'une force de poids de l'unité de cloisonnement (32a ; 32b ; 32c).

8. Dispositif de cloison d'aéronef selon la revendication 7,
**caractérisé en ce que** l'unité cadre (12a ; 12b ; 12c) comprend sur un côté tourné vers l'unité de cloisonnement (32a ; 32b ; 32c) au moins une unité de fixement (34a), qui est prévue au moins pour un fixement en liaison de forme de l'unité de cloisonnement (32a ; 32b ; 32c).

9. Dispositif de cloison d'aéronef selon la revendication 7 ou 8,
**caractérisé en ce qu'**en état monté une longueur d'étendue verticale de l'unité de cloisonnement (32a ; 32b) est équivalent à au moins 30 % et/ou maximalement 95 % d'une longueur d'étendue verticale de l'unité cadre (12a ; 12b).

10. Dispositif de cloison d'aéronef selon l'une des revendications 7 à 9,
**caractérisé en ce que** l'unité de cloisonnement (32a ; 32b ; 32c) est réalisé à être au moins sensiblement indéformable.

11. Aéronef avec au moins un dispositif de cloison selon l'une des revendications précédentes.

12. Procédé de fabrication d'un dispositif de cloison d'aéronef selon l'une des revendications 1 à 10, où pour la mise en forme de l'unité cadre (12a) au moins une partie d'un produit semi-fini (36a) de l'unité cadre (12a) est soumise à une pression positive et chauffée.
